# EUROPEAN PATENT APPLICATION

(11) **EP 4 806 616 A1**
(43) Date of publication of application: **16.09.2026**
(21) Application number: 24888741.6
(22) Date of filing: 06.11.2024
(51) Int. Cl.: B29C 39/24, B29C 33/06, B29C 35/08

(54) **METHOD FOR MANUFACTURING SEALING MATERIAL, FILLING DEVICE, AND APPARATUS FOR MANUFACTURING SEALING MATERIAL**

(30) Priority: 09.11.2023 JP 2023191541
(71) Applicant: VALQUA, Ltd., Shinagawa-ku Tokyo 141-6024 (JP)
(72) Inventor: YOSHIDA, Sayaka, Gojo-shi, Nara 637-0014 (JP); TAKAHASHI, Kenichi, Gojo-shi, Nara 637-0014 (JP); UEDA, Akira, Gojo-shi, Nara 637-0014 (JP); SUZUKI, Kenn, Gojo-shi, Nara 637-0014 (JP)
(74) Representative: Vossius & Partner Patentanwälte Rechtsanwälte mbB
(86) International application number: PCT/JP2024/039464
(87) International publication number: WO 2025/100448

(57) **Abstract**

The present disclosure relates to a method of manufacturing a sealing material, the method including a filling step of filling a mold with an ultraviolet-curable sealing material composition by using a filling machine, the mold being composed of an upper mold and a lower mold, and in the filling step, a pressing plate being arranged above the upper mold and the mold being filled with the ultraviolet-curable sealing material composition while the pressing plate presses the upper mold against the lower mold. According to the present disclosure, a method of manufacturing a sealing material, a filling apparatus, and a sealing material manufacturing apparatus that can achieve suppression of leakage of the ultraviolet-curable sealing material composition between the upper mold and the lower mold can be provided.

## Description

### TECHNICAL FIELD

The present invention relates to a method of manufacturing a sealing material, a filling apparatus, and a sealing material manufacturing apparatus.

### BACKGROUND ART

Japanese Patent Laying-Open No. 2017-177720 (PTL 1) discloses a method of manufacturing a sealing material by filling a mold with a thermosetting rubber composition and performing hot press molding.

### CITATION LIST

### PATENT LITERATURE

PTL 1: Japanese Patent Laying-Open No. 2017-177720

### SUMMARY OF INVENTION

### TECHNICAL PROBLEM

As a method of manufacturing a sealing material, an ultraviolet curing method has been studied in which a mold is filled with an ultraviolet-curable sealing material composition and the ultraviolet-curable sealing material composition is cured by being irradiated with ultraviolet rays. In the ultraviolet curing method, the ultraviolet-curable sealing material composition is cured by being irradiated with ultraviolet rays. Therefore, as compared to a conventional thermal cross-linking method of thermally cross-linking a thermosetting rubber composition, time for manufacturing the sealing material tends to be shorter and no heat tends to be generated. The mold used for manufacturing the sealing material is often composed of a plurality of mold parts to make it easier to take the cured sealing material out of the mold.

An object of the present invention is to provide a method of manufacturing a sealing material, a filling apparatus, and a sealing material manufacturing apparatus that can achieve suppression of leakage of an ultraviolet-curable sealing material composition between an upper mold and a lower mold in a method of manufacturing a sealing material by an ultraviolet curing method.

### SOLUTION TO PROBLEM

The present invention provides a method of manufacturing a sealing material, a filling apparatus, and a sealing material manufacturing apparatus below.
[1] A method of manufacturing a sealing material includes a filling step of filling a mold with an ultraviolet-curable sealing material composition by using a filling machine,
   the mold is composed of an upper mold and a lower mold, and
   in the filling step, a pressing plate is arranged above the upper mold and the pressing plate presses the upper mold against the lower mold.
[2] In the method of manufacturing a sealing material according to [1], the filling machine applies a load to the pressing plate.
[3] In the method of manufacturing a sealing material according to [2], a spring is arranged between the filling machine and the pressing plate.
[4] The method of manufacturing a sealing material according to any one of [1] to [3] further includes
   a mold preparation step of preparing the mold before the filling step, and
   an irradiation step of irradiating the ultraviolet-curable sealing material composition with ultraviolet rays and a release step of taking the sealing material out of the mold that follow the filling step.
   The mold filled with the ultraviolet-curable sealing material composition in the filling step is conveyed to the irradiation step.
   The mold out of which the sealing material has been taken in the release step is returned to the mold preparation step.
[5] In the method of manufacturing a sealing material according to any one of [1] to [4], the mold is formed of at least one selected from the group consisting of glass, quartz, polyester-based resin, polycarbonate-based resin, acrylic-based resin, tetrafluoroethylene-perfluoroalkyl vinyl ether copolymer, polyvinylidene fluoride, polyvinyl fluoride, tetrafluoroethylene-ethylene copolymer, polychlorotrifluoroethylene, and cycloolefin polymer.
[6] A filling apparatus fills a mold with an ultraviolet-curable sealing material composition,
   the mold is composed of an upper mold and a lower mold, and
   the filling apparatus includes means for pressing the upper mold against the lower mold with a pressing plate.
[7] The filling apparatus according to [6] further includes a filling machine, and
   a spring is arranged between the filling machine and the pressing plate and the filling machine is lowered to apply a load to the pressing plate with the spring being interposed.
[8] A sealing material manufacturing apparatus includes the filling apparatus according to [6] or [7].
[9] A mold is used for the method of manufacturing a sealing material according to any one of [1] to [5], and the mold is formed of at least one selected from the group consisting of glass, quartz, polyester-based resin, polycarbonate-based resin, acrylic-based resin, tetrafluoroethylene-perfluoroalkyl vinyl ether copolymer, polyvinylidene fluoride, polyvinyl fluoride, tetrafluoroethylene-ethylene copolymer, polychlorotrifluoroethylene, and cycloolefin polymer.

### ADVANTAGEOUS EFFECTS OF INVENTION

According to the present invention, a method of manufacturing a sealing material, a filling apparatus, and a sealing material manufacturing apparatus that can achieve suppression of leakage of an ultraviolet-curable sealing material composition between an upper mold and a lower mold in a method of manufacturing a sealing material by an ultraviolet curing method can be provided.

### BRIEF DESCRIPTION OF DRAWINGS

[Fig. 1] Fig. 1 is a cross-sectional view for illustrating a filling step.
[Fig. 2] Fig. 2 is a cross-sectional view for illustrating an exemplary filling step.
[Fig. 3] Fig. 3 is a cross-sectional view for illustrating another exemplary filling step.
[Fig. 4] Fig. 4 is a flowchart showing a method of manufacturing a sealing material.
[Fig. 5] Fig. 5 is a diagram schematically illustrating a system for successively manufacturing a sealing material.
[Fig. 6] Fig. 6 is a perspective view schematically showing a sealing material manufacturing apparatus.

### DESCRIPTION OF EMBODIMENTS

An embodiment of the present invention will be described below with reference to the drawings, however, the present invention is not limited to the embodiment below. In all drawings below, the scale is adjusted as appropriate for facilitated understanding of each constituent element and the scale of each constituent element shown in the drawings does not necessarily match the actual scale of the constituent element.

### <Method of Manufacturing Sealing Material>

A method of manufacturing a sealing material in the present invention includes a filling step of filling a mold with an ultraviolet-curable sealing material composition by using a filling machine. The mold is composed of an upper mold and a lower mold. In the filling step, a pressing plate is arranged above the upper mold and the pressing plate presses the upper mold against the lower mold.

In the method of manufacturing a sealing material, the sealing material can be manufactured by curing the ultraviolet-curable sealing material composition in the mold. The method of manufacturing a sealing material can further include, in addition to the filling step, a mold preparation step of preparing the mold, an irradiation step of irradiating the ultraviolet-curable sealing material composition filled in the mold with ultraviolet rays, and a release step of taking the sealing material out of the mold. In an example where the mold is conveyable, by employing a plurality of molds and conveying the molds between steps, a plurality of steps can independently and successively be performed, which can enhance productivity of the sealing material.

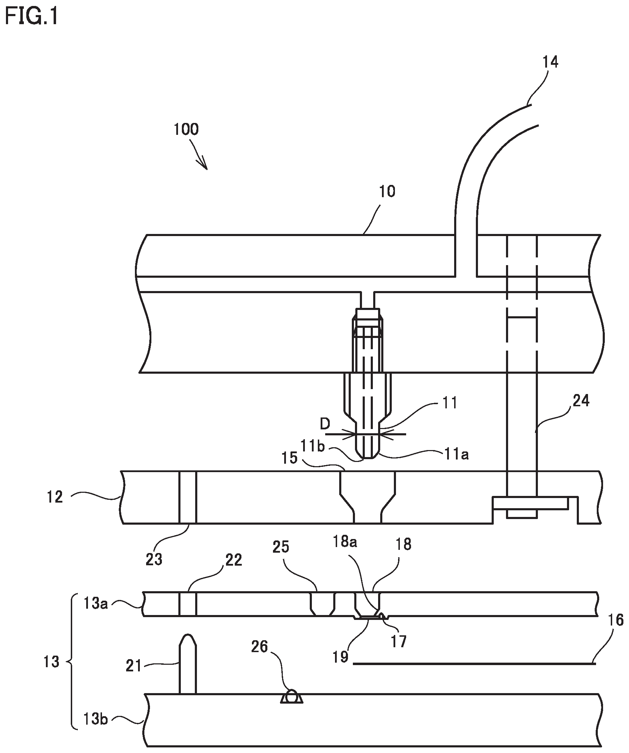

The filling step can be performed with a filling apparatus. The filling step will be described with reference to the drawings. Fig. 1 is a cross-sectional view for illustrating the filling step. A filling apparatus 100 includes a filling machine 10 and a pressing plate 12.

In the filling step, as shown in Fig. 1, initially, pressing plate 12 and a mold 13 are arranged below filling machine 10. Mold 13 is composed of an upper mold 13a and a lower mold 13b. In Fig. 1, mold 13 is arranged in such a manner that upper mold 13a and lower mold 13b are separate from each other. Upper mold 13a and lower mold 13b, however, may be arranged as being combined with each other. Mold 13 is removable from filling apparatus 100. Mold 13 can be conveyed, for example, from a step preceding the filling step (for example, the mold preparation step), set in filling apparatus 100, filled with the ultraviolet-curable sealing material composition, and thereafter conveyed to a step following the filling step.

In the filling step, mold 13 can be filled with the ultraviolet-curable sealing material composition by using filling machine 10. Filling machine 10 includes a filling nozzle 11. Filling machine 10 can include one filling nozzle or two or more filling nozzles. Filling machine 10 can include a material filling port 14. The ultraviolet-curable sealing material composition can be fed from material filling port 14 to filling nozzle 11. Filling nozzle 11 may have a tip end in a columnar shape (without a tapered portion which will be described later) or in a shape of a frustum of a cone (shown in Fig. 1 as a trapezoidal cross-sectional shape). In an example where the tip end is in the columnar shape, airtightness between filling nozzle 11 and mold 13 tends to readily be improved.

In an example where filling nozzle 11 has the tip end in the shape of the frustum of the cone, filling nozzle 11 may be provided with a tapered portion 11a. In an example where filling nozzle 11 is provided with tapered portion 11a, a filling nozzle insertion portion 18 into which filling nozzle 11 is to be inserted can more readily be brought closer to a cavity 17 and hence a runner portion can be shorter. By pressing upper mold 13a with filling machine 10 for sealing at tapered portion 11a and a tapered portion 18a of filling nozzle insertion portion 18, filling can be performed without leakage of the ultraviolet-curable sealing material composition between filling nozzle 11 and upper mold 13a.

Filling nozzle 11 can be arranged in alignment with a position of filling nozzle insertion portion 18 which will be described later, so as to be inserted into filling nozzle insertion portion 18.

A sealing mechanism may be provided at a tip end 11b of filling nozzle 11. For example, a sealing material (for example, an O-ring or the like) can be arranged as the sealing mechanism.

With a diameter of filling nozzle 11 being defined as a distance D shown in Fig. 1, diameter D of filling nozzle 11 may be set, for example, to 0.5 to 50 mm, preferably 1 to 20 mm, and more preferably 1 to 10 mm.

Pressing plate 12 may be made, for example, of metal. Examples of the metal include iron, stainless steel (SUS), and the like. Pressing plate 12 may have a flat plate shape. Pressing plate 12 can have a thickness, for example, from 5 to 10 mm. When the thickness of pressing plate 12 is within the range above, leakage of the ultraviolet-curable sealing material composition to the outside of the cavity in mold 13 can readily be suppressed.

Pressing plate 12 may be provided with a nozzle through hole 15 for insertion of filling nozzle 11 into mold 13. Filling nozzle 11 can be inserted through nozzle through hole 15 into filling nozzle insertion portion 18 which will be described later.

Pressing plate 12 presses upper mold 13a against lower mold 13b. While pressing plate 12 presses upper mold 13a against lower mold 13b, mold 13 can be filled with the ultraviolet-curable sealing material composition. Upper mold 13a and lower mold 13b can be fixed by a fastening jig which will be described later while pressing plate 12 presses upper mold 13a against lower mold 13b, so that mold 13 can be filled with the ultraviolet-curable sealing material composition. By filling mold 13 with the ultraviolet-curable sealing material composition while upper mold 13a is pressed against lower mold 13b, leakage of the ultraviolet-curable sealing material composition to the outside of the cavity in mold 13 can readily be suppressed.

A pressure (filling pressure) for filling the mold with the ultraviolet-curable sealing material composition may be, for example, from 0.05 to 15 MPa and preferably from 0.1 to 1 MPa.

Examples of a method of pressing upper mold 13a against lower mold 13b with pressing plate 12 include a method of arranging an interlocking mechanism 24 that simultaneously lowers filling machine 10 and pressing plate 12 and lowering filling machine 10 to thereby apply a load to pressing plate 12 and a method of lowering pressing plate 12 with a mechanism that lowers pressing plate 12 (which is also referred to as a second mechanism below) separate from a mechanism that lowers filling machine 10 (which is also referred to as a first mechanism below).

In application of a load to pressing plate 12, it can be done on a stage greater in load resistance, with pressing plate 12 and mold 13 being moved away from a conveyance system. The load applied to pressing plate 12 can thus be increased and the ultraviolet-curable sealing material composition can be filled with great force such as a hydraulic pressure.

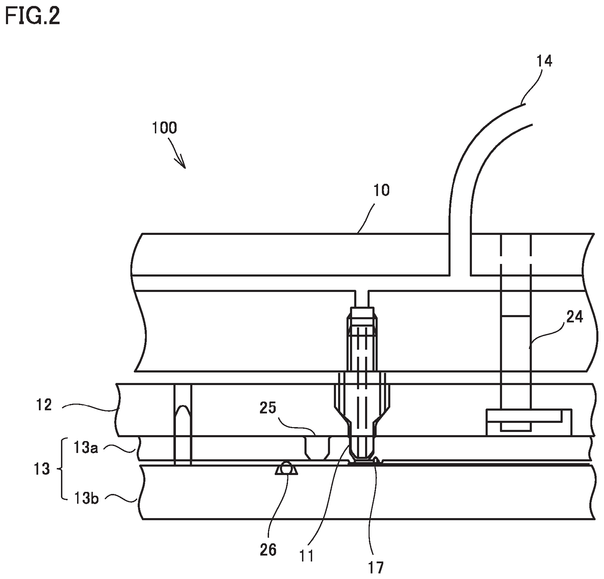

Fig. 2 shows a state in which upper mold 13a is pressed against lower mold 13b while a load is applied to pressing plate 12 by lowering filling machine 10 from the state in Fig. 1. A spring can be arranged between filling machine 10 and pressing plate 12. By arranging the spring, the load applied to pressing plate 12 by lowering filling machine 10 can be appropriate.

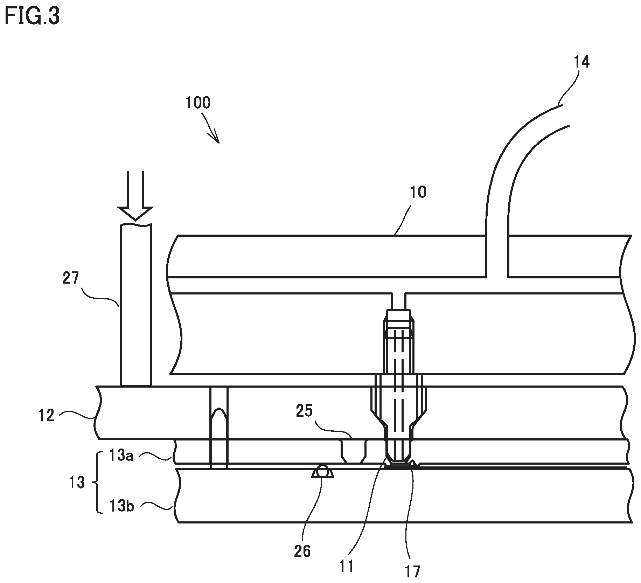

Fig. 3 shows a state in which a second mechanism 27 lowers pressing plate 12 in a direction shown with an arrow to press upper mold 13a against lower mold 13b.

After a state is established in which upper mold 13a is pressed against lower mold 13b while filling machine 10 or second mechanism 27 applies the load to pressing plate 12, mold 13 can be filled with the ultraviolet-curable sealing material composition. In order to allow the ultraviolet-curable sealing material composition to readily flow, vacuum can be produced inside mold 13 through an exhaust port 25 while or before mold 13 is filled with the ultraviolet-curable sealing material composition from filling nozzle 11. In order to facilitate production of vacuum, a mold sealing material 26 may be arranged or a sealing material (for example, an O-ring or the like) may be arranged at a tip end of the filling nozzle. Mold sealing material 26 may be, for example, an O-ring or the like.

The load applied to pressing plate 12 can be force greater than the filling pressure for filling the ultraviolet-curable sealing material composition. In an example where mold sealing material 26 is arranged in lower mold 13b, the load applied to pressing plate 12 can be force greater than the sum of the filling pressure for filling the ultraviolet-curable sealing material composition and repulsive force of mold sealing material 26. The load (MPa) applied to pressing plate 12 may be a load greater than the filling pressure for filling the ultraviolet-curable sealing material composition, such as 0.05 MPa. When the load applied to pressing plate 12 is within the range above, leakage of the ultraviolet-curable sealing material composition to the outside of cavity 17 from a joint between upper mold 13a and lower mold 13b tends to readily be suppressed.

After upper mold 13a is pressed against lower mold 13b while filling machine 10 or second mechanism 27 applies the load to pressing plate 12, upper mold 13a and lower mold 13b can be fixed in that state by being clamped by a fastening jig (not shown). The mold in which upper mold 13a and lower mold 13b are fixed by being clamped by the fastening jig maintains the state in which upper mold 13a is pressed against lower mold 13b even after the load applied by pressing plate 12 is removed after filling with the ultraviolet-curable sealing material composition. Therefore, the mold can be conveyed before a subsequent irradiation step while leakage of the ultraviolet-curable sealing material composition to the outside of cavity 17 is suppressed. The fastening jig may be, for example, a clamp, a screw, or the like. Fastening force by the fastening jig may be equal to or greater than the load applied to pressing plate 12.

In order to irradiate the ultraviolet-curable sealing material composition filled in mold 13 with ultraviolet rays to cure the same, upper mold 13a can normally have ultraviolet transparency. Ultraviolet transparency of upper mold 13a may be, for example, light transmittance not lower than 80% at a wavelength of 365 nm, and from a point of view of curability of the ultraviolet-curable sealing material composition, it is preferably not lower than 90% and more preferably not lower than 95% and normally not higher than 100%. The entire mold 13 or only a portion necessary for curing the ultraviolet-curable sealing material composition may have ultraviolet transparency.

Upper mold 13a is formed of a material having ultraviolet transparency. In upper mold 13a, a portion that should have ultraviolet transparency may be formed of a material having ultraviolet transparency and other portions may be composed of a material having no ultraviolet transparency. Examples of the material having ultraviolet transparency include glass, quartz, polyester-based resin, polycarbonate-based resin, acrylic-based resin, tetrafluoroethylene-perfluoroalkyl vinyl ether copolymer (PFA), polyvinylidene fluoride (PVDF), polyvinyl fluoride (PVF), tetrafluoroethylene-ethylene copolymer (ETFE), polychlorotrifluoroethylene (ECTFE), cycloolefin polymer (COP), and the like. Among them, from a point of view of ease in handling and transparency, tetrafluoroethylene-perfluoroalkyl vinyl ether copolymer (PFA) and acrylic-based resin are preferable, and acrylic-based resin is more preferable. One material having ultraviolet transparency can be used alone, or two or more types of such materials can be used in combination. The material for upper mold 13a is preferably acrylic-based resin or tetrafluoroethylene-perfluoroalkyl vinyl ether copolymer (PFA), and more preferably acrylic-based resin.

Upper mold 13a can have a thickness, for example, not larger than 20 mm. In an example where the thickness of upper mold 13a is within the range above, the ultraviolet transparency can readily be enhanced and a distance between the ultraviolet-curable sealing material composition filled in the mold and a source of ultraviolet rays to be emitted can readily be reduced. Therefore, the ultraviolet-curable sealing material composition can efficiently be cured. In an example where the thickness of upper mold 13a is not larger than 20 mm, warping normally occurs due to the filling pressure for filling the ultraviolet-curable sealing material composition, and a gap tends to readily be provided between upper mold 13a and lower mold 13b. According to the present invention, however, even when the thickness of upper mold 13a is not larger than 20 mm, filling is performed while upper mold 13a is pressed against lower mold 13b, and hence warping of upper mold 13a is suppressed and leakage of the ultraviolet-curable sealing material composition to the outside of the cavity in mold 13 can readily be suppressed. The thickness of upper mold 13a is preferably not larger than 15 mm, more preferably not larger than 10 mm, and further preferably not larger than 5 mm, and may be, for example, not smaller than 1 mm. In an example where an upper surface of upper mold 13a is flat, the upper mold tends to readily be pressed by pressing plate 12. The thickness of each of upper mold 13a and lower mold 13b herein refers to the thickness of a largest thickness portion thereof in a direction of pressing by pressing plate 12.

Materials exemplified as the material for upper mold 13a are applied as exemplary materials for lower mold 13b. Types of the materials for upper mold 13a and lower mold 13b may be the same or different. Lower mold 13b should only have a thickness large enough to withstand the load applied by pressing plate 12 and the filling pressure for filling the ultraviolet-curable sealing material composition.

As shown in Fig. 1, in arranging pressing plate 12 and mold 13 below filling machine 10, a substrate 16 where a sealing material is to be formed may be arranged between upper mold 13a and lower mold 13b. Substrate 16 may be, for example, one type selected from the group consisting of a film, a plate material, and a molded product. Substrate 16 may be, for example, a metal plate or the like, and may preferably be composed of SUS or the like. Substrate 16 may be contained in a product together with the sealing material.

Mold 13 can be provided with cavity 17. Cavity 17 can be defined by upper mold 13a and lower mold 13b. In an example where substrate 16 is arranged as shown in Fig. 1, cavity 17 is defined by upper mold 13a and substrate 16.

Cavity 17 can be in a shape in accordance with the shape of the sealing material to be manufactured. The sealing material can be formed by curing the ultraviolet-curable sealing material composition filled in cavity 17.

Mold 13 can include filling nozzle insertion portion 18 into which filling nozzle 11 for filling the ultraviolet-curable sealing material composition is to be inserted. Filling nozzle insertion portion 18 is preferably in a shape compatible with filling nozzle 11. As described above, in an example where filling nozzle 11 is provided with tapered portion 11a, filling nozzle insertion portion 18 can be provided with tapered portion 18a. In an example where filling nozzle 11 has the columnar shape without tapered portion 11a, filling nozzle insertion portion 18 can have the columnar shape without the tapered portion.

From a point of view of airtightness between filling nozzle 11 and mold 13, tapered portion 18a can be equal in taper angle to tapered portion 11a. Thus, when filling nozzle 11 is pressed against mold 13 and a load is applied, a surface where filling nozzle 11 and mold 13 are in intimate contact becomes larger. Consequently, airtightness between filling nozzle 11 and mold 13 increases, and leakage of the ultraviolet-curable sealing material composition between filling nozzle 11 and mold 13 tends to readily be suppressed. The taper angle of tapered portion 18a (a smaller angle of angles formed between a horizontal direction and tapered portion 18a in Fig. 1) may be, for example, not smaller than 0° and smaller than 90° and preferably not smaller than 30° and not larger than 60°. The taper angle of tapered portion 18a can be adjusted, for example, in accordance with a location where cavity 17 is arranged.

Mold 13 may further include a runner portion 19. Filling nozzle insertion portion 18 may be connected to runner portion 19 and runner portion 19 may be connected to cavity 17.

Mold 13 may include one or more filling nozzle insertion portions 18, one or more cavities 17, and one or more runner portions 19. In an example where a plurality of filling nozzle insertion portions 18 are provided, the ultraviolet-curable sealing material composition can be filled from a plurality of locations, which can decrease time for the filling step. Filling nozzle insertion portion 18 may be arranged as being directly connected to cavity 17, or may be arranged as being connected to cavity 17 through runner portion 19. Runner portion 19 can be a path through which the ultraviolet-curable sealing material composition flows to cavity 17.

When the ultraviolet-curable sealing material composition remains in the runner portion, the remaining ultraviolet-curable sealing material composition may be cured by irradiation with ultraviolet rays, the cured product cannot be taken out of the runner portion, and consequently successive molding of the sealing material may become difficult. Therefore, filling nozzle insertion portion 18 and cavity 17 are preferably arranged such that runner portion 19 is as short as possible.

Lower mold 13b may include a projection 21 for fixing pressing plate 12 and upper mold 13a. By inserting projection 21 into a through hole 22 in pressing plate 12 and a through hole 23 in upper mold 13a, lower mold 13b, pressing plate 12, and upper mold 13a can be fixed.

The ultraviolet-curable sealing material composition to be filled in mold 13 is a composition having a property of being cured by receiving irradiation with ultraviolet rays. The ultraviolet-curable sealing material composition can contain an ultraviolet-curable resin component and a photopolymerization initiator.

Examples of the ultraviolet-curable resin component include rubber-based resin, polyolefin-based resin, acrylic-based resin, epoxy resin, silicone-based resin, urethane-based resin, vinyl alkyl ether-based resin, polyvinylpyrrolidone-based resin, polyacrylamide-based resin, cellulose-based resin, and the like. The ultraviolet-curable resin component may include polyolefin-based resin, acrylic resin, or epoxy resin. Cured products thereof can have cross-linking points and can have rubber elasticity.

Examples of the rubber-based resin include isoprene rubber, butadiene rubber, styrene-butadiene rubber, chloroprene rubber, nitrile rubber, ethylene-propylene rubber, chlorosulfonated polyethylene rubber, acrylic rubber, fluorine rubber, epichlorohydrin rubber, urethane rubber, silicone rubber, and the like. Examples of the polyolefin-based resin include polyisobutylene and the like. Examples of commercially available ultraviolet-curable sealing material compositions containing polyolefin-based resin include ThreeBond 3178 (manufactured by ThreeBond Co., Ltd.) and the like.

A content of the ultraviolet-curable resin component may be, for example, not lower than 50 mass % in the solid content of the ultraviolet-curable sealing material composition, and it is preferably not lower than 50 mass %, more preferably not lower than 60 mass %, further preferably not lower than 70 mass %, particularly preferably not lower than 80 mass %, and extremely preferably not lower than 90 mass %. The content of the ultraviolet-curable resin component may be, for example, not higher than 99 mass % or not higher than 98 mass % in the solid content of the ultraviolet-curable sealing material composition.

Examples of the photopolymerization initiator include a photocationic polymerization initiator, a photoradical polymerization initiator, and the like.

The content of the photopolymerization initiator may be, for example, not less than 0.001 part by mass and not more than 10 parts by mass, preferably not less than 0.005 part by mass and not more than 10 parts by mass, and more preferably not less than 0.01 part by mass and not more than 10 parts by mass, with respect to 100 parts by mass of the ultraviolet-curable resin component.

The ultraviolet-curable sealing material composition can further contain a cross-linking agent, other resin components, an additive, a filler, and the like.

A viscosity of the ultraviolet-curable sealing material composition may be, for example, not higher than 500 Pa•s, and from a point of view of filling properties, it is preferably not higher than 300 Pa•s and more preferably not higher than 200 Pa•s. The viscosity of the ultraviolet-curable sealing material composition is measured, for example, with a B-type viscometer. In order to facilitate filling, the viscosity of the ultraviolet-curable sealing material composition may be lowered by heat.

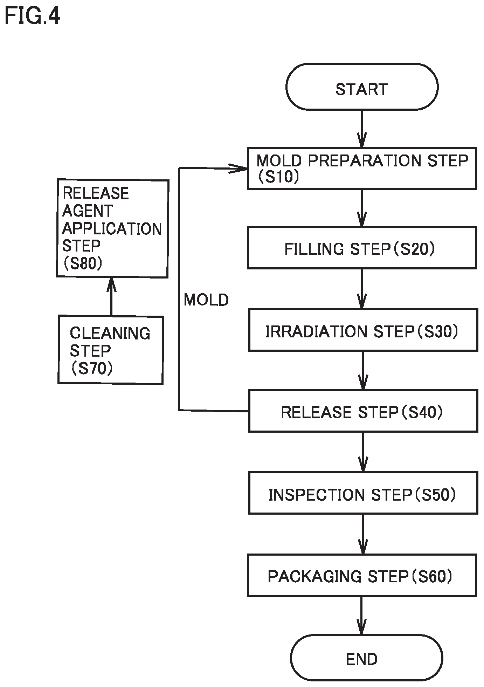

The method of manufacturing a sealing material may be a method of successively manufacturing a sealing material. As shown in Fig. 4, the method of manufacturing a sealing material can include a mold preparation step (S10), a filling step (S20), an irradiation step (S30), and a release step (S40). The mold filled with the ultraviolet-curable sealing material composition in the filling step (S20) can be conveyed to the irradiation step (S30), and the mold out of which the sealing material has been taken in the release step can be returned to the mold preparation step. The method of manufacturing a sealing material shown in Fig. 4 further includes an inspection step (S50) of inspecting the taken-out sealing material, a packaging step (S60) of packaging the sealing material, a cleaning step (S70) of cleaning the mold to be returned to the mold preparation step (S10), a release agent application step (S80) of applying a release agent to the cleaned mold, and the like. In the method of manufacturing a sealing material, steps from the mold preparation step (S10) to the release agent application step (S80) can successively be performed. By returning the mold to the mold preparation step (S10) after the release step (S40), the steps above can repeatedly and successively be performed.

A system for successively manufacturing the sealing material is not particularly limited, and examples thereof include a system in which the steps above are performed in series while the molds are linearly conveyed (which is also referred to as a linear system below), a system in which a plurality of linear systems are arranged side by side (which is also referred to as a multi-line system below), a system in which the steps above are performed while the molds are concentrically conveyed (which is also referred to as a rotation system below), and the like. Furthermore, a plurality of steps may be integrated and performed as a single step, or a plurality of steps may be performed in parallel.

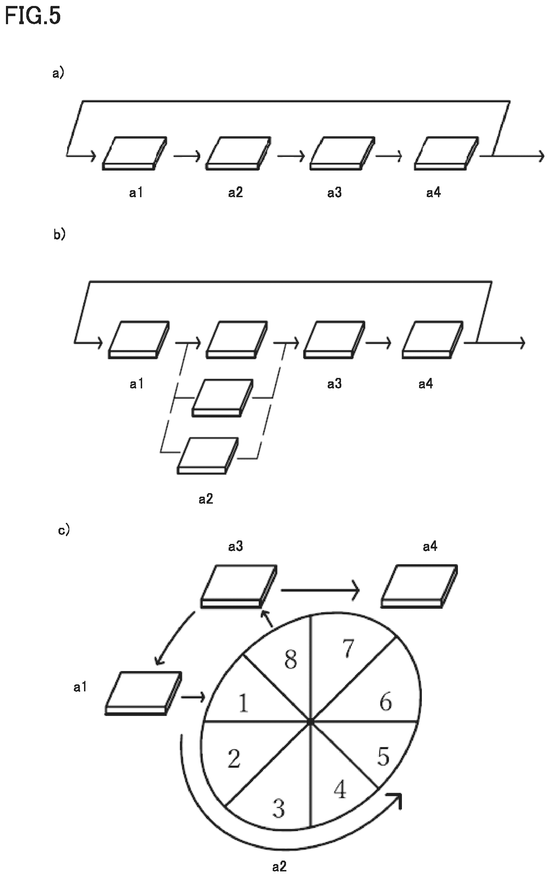

Fig. 5 is a diagram illustrating a system for successively manufacturing a sealing material, with a direction of conveyance of the molds being shown with an arrow. The system shown in Fig. 5(a) is the linear system in which steps a1, a2, a3, and a4 are successively performed in this order, the mold is collected in step a4 (for example, the release step), and the mold is returned to step a1 (for example, the mold preparation step). The system shown in Fig. 5(b) is the linear system in which step a2 is performed a plurality of times in parallel while steps a1, a2, a3, and a4 are successively performed in this order, the mold is collected in step a4 (for example, the release step), and the mold is returned to step a1 (for example, the mold preparation step). The system shown in Fig. 5(c) is the rotation system in which steps a1, a2, a3, and a4 are successively performed in this order, and in step a2, processing is performed while the molds are concentrically conveyed in the order of 1 to 8. As shown in Fig. 5(c), for example, a product can be taken out of the mold in step a3 (for example, the release step), the mold can be returned to step a1 (for example, the mold preparation step), and the product can be conveyed to subsequent step a4 (for example, the inspection step or the like).

In the method of manufacturing a sealing material, for example, time from the mold preparation step through the filling step and the irradiation step to removal of the sealing material in the release step (cycle time) may be, for example, not longer than 60 seconds, and it can be preferably not longer than 50 seconds, more preferably not longer than 40 seconds, further preferably not longer than 30 seconds, particularly preferably not longer than 20 seconds, and extremely preferably not longer than 10 seconds.

The type of the sealing material manufactured with the method of manufacturing a sealing material is not particularly limited. Applications of the sealing material manufactured with the method of manufacturing a sealing material are not particularly limited, and may be, for example, applications such as vehicles, aircrafts, marine vessels, internal combustion engines, manufacturing equipment, plants, medical products, constructions, semiconductors, food, batteries, and the like. The sealing material in the present invention can also be combined with a mold, a resin component, or various sheets to form an integrally molded product, a composite product, or the like.

### <Filling Apparatus>

A filling apparatus according to another aspect of the present invention is a filling apparatus that fills a mold with an ultraviolet-curable sealing material composition. The mold is composed of an upper mold and a lower mold. The filling apparatus includes means for pressing the upper mold against the lower mold with a pressing plate. The description above applies to the filling apparatus, the ultraviolet-curable sealing material composition, the mold, the upper mold, the lower mold, and the pressing plate. The filling apparatus can include the filling machine described above.

The means for pressing the upper mold against the lower mold with the pressing plate may be, for example, means for lowering the filling machine, or means capable of directly applying a load to the pressing plate other than lowering the filling machine.

In an example where the means for pressing the upper mold against the lower mold with the pressing plate is means for lowering the filling machine, a spring can be arranged between the filling machine and the pressing plate, and the filling machine can be lowered to apply a load to the pressing plate with the spring being interposed.

### <Sealing Material Manufacturing Apparatus>

The method of manufacturing a sealing material can use a sealing material manufacturing apparatus. The sealing material manufacturing apparatus can include the filling apparatus described above. In the sealing material manufacturing apparatus, a plurality of apparatuses used for performing the steps above may linearly be arranged, some or all of the plurality of apparatuses may be arranged in parallel, the plurality of apparatuses may concentrically be arranged, or these arrangements may be combined.

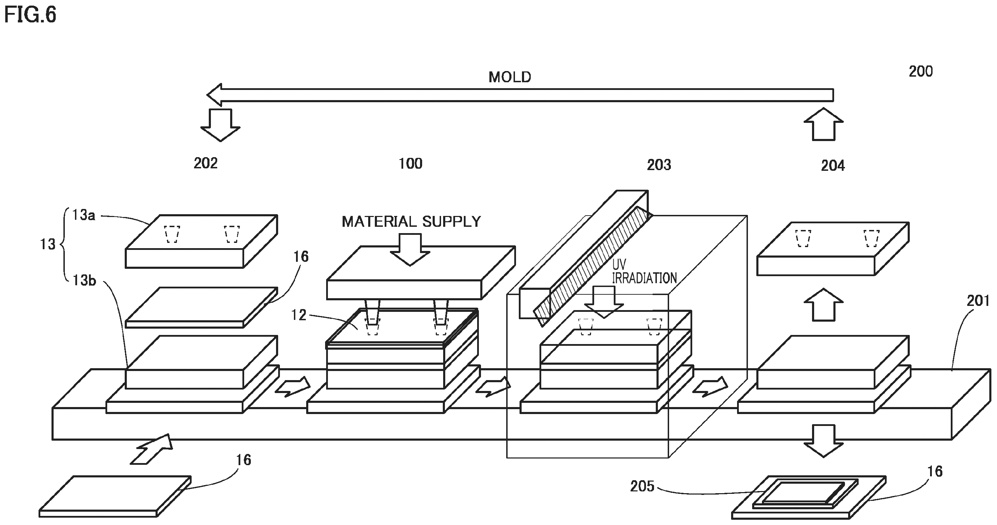

Fig. 6 shows a sealing material manufacturing apparatus of the linear system. The sealing material manufacturing apparatus in the present invention will be described with reference to a sealing material manufacturing apparatus 200 shown in Fig. 6. In sealing material manufacturing apparatus 200, a conveyance apparatus 201, a mold supply apparatus 202, mold 13, filling apparatus 100, an ultraviolet ray emission apparatus 203, and a release apparatus 204 are linearly arranged. Mold 13 is supplied by mold supply apparatus 202, mold 13 is conveyed to filling apparatus 100 by conveyance apparatus 201, mold 13 is filled with the ultraviolet-curable sealing material composition by filling apparatus 100, ultraviolet rays are then emitted in ultraviolet ray emission apparatus 203, and after curing, a sealing material 205 is removed from mold 13 by release apparatus 204. In mold supply apparatus 202, substrate 16 is arranged between upper mold 13a and lower mold 13b. Mold 13 is returned to mold supply apparatus 202 as following an arrow from release apparatus 204.

For example, a belt conveyor, a free-flow conveyor, a linear conveyor module, a conveyance roll, a conveyance arm, or the like can be employed as conveyance apparatus 201.

Ultraviolet ray emission apparatus 203 can include, for example, a light source such as a metal halide lamp or an LED. According to the present invention, since the thickness of the upper mold can be reduced, a distance between the light source and the ultraviolet-curable sealing material composition filled in the mold can readily be made shorter. In an example where the distance from the ultraviolet-curable sealing material composition filled in the mold is short, the ultraviolet-curable sealing material composition filled in the mold tends to readily be cured in a short period of time, for example, even without irradiation with ultraviolet rays at high illuminance. The distance between the light source and the ultraviolet-curable sealing material composition filled in the mold may be, for example, not longer than 30 mm, and from a point of view of efficient curing of the ultraviolet-curable sealing material composition, it is preferably not longer than 20 mm, more preferably not longer than 15 mm, further preferably not longer than 10 mm, and particularly preferably not longer than 6 mm.

### EXAMPLES

The present invention will be described below in further detail by way of an Example. "%" and "part(s)" in Example represent mass % and part(s) by mass unless otherwise specified.

### [Preparation of Ultraviolet-Curable Sealing Material Composition]

An ultraviolet-curable sealing material composition was prepared by mixing polyisobutylene and a photopolymerization initiator and stirring them.

### <Example 1>

In the mold preparation step, a mold was prepared by arranging an SUS plate between an upper mold and a lower mold made of an acrylic-based resin. The upper mold was provided with a filling nozzle insertion portion, a runner portion, and a gate portion. The upper mold had a thickness of 5 mm. A pressing plate made of SUS was arranged above the upper mold of the mold conveyed to the filling step by a belt conveyor. By lowering a filling machine of a filling apparatus, a load was applied to the pressing plate with a spring being interposed, the spring being arranged between the filling machine and the pressing plate, the upper mold was pressed against the lower mold, and a filling nozzle of the filling apparatus was inserted into the filling nozzle insertion portion. While the upper mold was pressed against the lower mold, the upper mold and the lower mold were fixed with a clamp, and a cavity in the mold was filled with an ultraviolet-curable sealing material composition from the filling nozzle. The filling nozzle was then removed from the mold. Thereafter, the mold filled with the ultraviolet-curable sealing material composition was conveyed to the irradiation step, ultraviolet rays were emitted from an ultraviolet ray emission apparatus including an LED as a source of ultraviolet rays, and the ultraviolet-curable sealing material composition was cured. Thereafter, the mold was conveyed to the release step, the clamp was removed, and the sealing material was removed from the mold together with the SUS plate. No leakage of the ultraviolet-curable sealing material composition was observed between the upper mold and the lower mold.

### REFERENCE SIGNS LIST

10 filling machine; 11 filling nozzle; 11a tapered portion; 11b tip end; 12 pressing plate; 13 mold; 13a upper mold; 13b lower mold; 14 material filling port; 15 nozzle through hole; 16 substrate; 17 cavity; 18 filling nozzle insertion portion; 18a tapered portion; 19 runner portion; 21 projection; 22, 23 through hole; 24 interlocking mechanism; 25 exhaust port; 26 mold sealing material; 27 second mechanism; 100 filling apparatus; 200 sealing material manufacturing apparatus; 201 conveyance apparatus; 202 mold supply apparatus; 203 ultraviolet ray emission apparatus; 204 release apparatus; 205 sealing material.

## Claims

1. A method of manufacturing a sealing material, comprising:
a filling step of filling a mold with an ultraviolet-curable sealing material composition by using a filling machine, wherein
the mold is composed of an upper mold and a lower mold, and
in the filling step, a pressing plate is arranged above the upper mold and the pressing plate presses the upper mold against the lower mold.

2. The method of manufacturing a sealing material according to claim 1, wherein
the filling machine applies a load to the pressing plate.

3. The method of manufacturing a sealing material according to claim 2, wherein
a spring is arranged between the filling machine and the pressing plate.

4. The method of manufacturing a sealing material according to claim 1, further comprising:
a mold preparation step of preparing the mold before the filling step; and
an irradiation step of irradiating the ultraviolet-curable sealing material composition with ultraviolet rays and a release step of taking the sealing material out of the mold that follow the filling step, wherein
the mold filled with the ultraviolet-curable sealing material composition in the filling step is conveyed to the irradiation step, and
the mold out of which the sealing material has been taken in the release step is returned to the mold preparation step.

5. The method of manufacturing a sealing material according to claim 1, wherein
the mold is formed of at least one selected from the group consisting of glass, quartz, polyester-based resin, polycarbonate-based resin, acrylic-based resin, tetrafluoroethylene-perfluoroalkyl vinyl ether copolymer, polyvinylidene fluoride, polyvinyl fluoride, tetrafluoroethylene-ethylene copolymer, polychlorotrifluoroethylene, and cycloolefin polymer.

6. A filling apparatus that fills a mold with an ultraviolet-curable sealing material composition, the mold being composed of an upper mold and a lower mold, the filling apparatus comprising:
means for pressing the upper mold against the lower mold with a pressing plate.

7. The filling apparatus according to claim 6, further comprising a filling machine, wherein
a spring is arranged between the filling machine and the pressing plate, and
the filling machine is lowered to apply a load to the pressing plate with the spring being interposed.

8. A sealing material manufacturing apparatus comprising the filling apparatus according to claim 6 or 7.

9. A mold to be used for the method of manufacturing a sealing material according to claim 1,
the mold being formed of at least one selected from the group consisting of glass, quartz, polyester-based resin, polycarbonate-based resin, acrylic-based resin, tetrafluoroethylene-perfluoroalkyl vinyl ether copolymer, polyvinylidene fluoride, polyvinyl fluoride, tetrafluoroethylene-ethylene copolymer, polychlorotrifluoroethylene, and cycloolefin polymer.
